Europäisches Patentamt

European Patent Office

Office européen des brevets

(11) Numéro de publication: **0 057 339**
**B1**

(12) **FASCICULE DE BREVET EUROPEEN**

(45) Date de publication du fascicule du brevet: **29.05.85**

(21) Numéro de dépôt: **81402052.5**

(22) Date de dépôt: **22.12.81**

(51) Int. Cl.⁴: **G 02 B 27/40,** G 02 B 27/00, G 11 B 7/08

(54) **Dispositif optique détecteur d'écart de focalisation et enregistreur-lecteur optique comportant un tel dispositif.**

(30) Priorité: **20.01.81 FR 8100947**

(43) Date de publication de la demande:
**11.08.82 Bulletin 82/32**

(45) Mention de la délivrance du brevet:
**29.05.85 Bulletin 85/22**

(84) Etats contractants désignés:
**DE GB IT NL**

(56) Documents cités:
**DE-A-2 917 163**
**DE-A-2 917 221**
**FR-A-2 271 590**
**FR-A-2 337 473**
**FR-A-2 459 513**
**US-A-3 969 573**
**US-A-4 272 651**
**US-A-4 296 316**

(73) Titulaire: **THOMSON-CSF**
**173, Boulevard Haussmann**
**F-75379 Paris Cedex 08 (FR)**

(72) Inventeur: **Thirouard, Michel**
**THOMSON-CSF SCPI 173, bld Haussmann**
**F-75360 Paris Cedex 08 (FR)**
Inventeur: **Arquie, Louis**
**THOMSON-CSF SCPI 173, bld Haussmann**
**F-75360 Paris Cedex 08 (FR)**

(74) Mandataire: **Weinmiller, Jürgen et al**
**Zeppelinstrasse 63**
**D-8000 München 80 (DE)**

Courier Press, Leamington Spa, England.

## Description

La présente invention se rapporte à un dispositif optique détecteur d'écart de focalisation entre le point de convergence d'un rayonnement lumineux et une surfac réfléchissante; ce dispositif comportant une source laser astigmatique à semi-conducteur.

L'invention se rapporte au domaine des disques supports d'information, enregistrables et lisibles optiquement, l'information étant enregistrée sous forme d'une modulation de relief.

Le dispositif optique de l'invention réalise à la fois les fonctions d'émission d'un faisceau à partir d'une source laser à semiconducteur à "guidage par gain" et de réception du faisceau réfléchi par des moyens opto-électriques de détection, ces deux fonctions étant parfaitement découplées. Il comprend un nombre réduit d'élément, d'où un faible encombrement et peu de réglages.

Dans les dispositifs de l'art connu, on utilise des asservissements de focalisation de type "asymétrique". L'inconvénient majeur de ce type d'asservissement réside en la manière d'éclairer asymétriquement la pupille d'entrée de l'objectif de gravure, ce que fait perdre en qualité diamètre de tache, d'où une fréquence de coupure du système abaissée.

Il est connu de document FR—2 271 590 d'utiliser une lentille astigmatique entre une source stigmatique et en objectif stigmatique pour former un spot d'éclairement d'une surface réfléchissante. Le rayonnement réfléchi par l'objectif permet de projeter dans un plan de détection une image présentant de l'astigmatisme, afin de mettre en évidence une erreur de focalisation. L'inconvénient de cette disposition est rendre astigmatique l'éclairement de la surface réfléchissante.

Avec un asservissement dit "astigmatique" très bien adapté au type de laser mentionné, l'éclairage de la pupille d'entrée de l'objectif de gravure est uniforme et à pleine ouverture. La tâche focalisée sur le disque est par conséquent de meilleure qualité.

Le dispositif de l'invention utilise l'astigmatisme d'un laser semi-conducteur à "guidage par gain" pour réaliser un asservissement de focalisation nécessaire à la conception d'une tête d'enregistrement lecture sur disque optique. On peut ainsi utiliser ce dispositif pour la lecture, l'enregistrement avec éventuellement contrôle et assurer simultanément la détection d'erreurs de focalisation et la détection de suivi radial. La tête obtenue peut être compacte et légère, les réglages aisés à réaliser, sans nécessiter un objectif à grand champ.

Le dispositif de l'invention a pour objet un dispositif optique détecteur d'écart de focalisation entre le point de convergence d'un rayonnement lumineux et une surface réfléchissante comportant une source laser à semiconducteur émettant ce rayonnement lumineux et éclairant cette surface via un objectif; cet objectif assurant la focalisation du rayonnement reçu de cette source; des moyens optiques séparateurs étant positionnés entre cette source et cet objectif pour renvoyer vers des moyens photodétecteurs le rayonnement recueilli par cet objectif en provenance de cette surface réfléchissante, ces moyens photodétecteurs comportant quatre éléments dont les faces sensibles occupent quatre quadrants, caractérisé en ce que cette source présente un astigmatisme longitudinal, une lentille astigmatique étant placée entre lesdits moyens optiques séparateurs et ledit objectif afin de compenser cet astigmatisme longitudinal et d'introduire un astigmatisme du rayonnement recueilli par cet objectif en provenance de cette surface réfléchissante.

Il a également pour objet un enregistreur-lecteur de disque optique comportant un tel dispositif optique.

D'autres caractéristiques et avantages de l'invention apparaîtront dans la description ci-après, en référence aux figures annexées parmi lesquelles:

— la figure 1 illustre un aspect particulier du dispositif optique selon l'invention;
— la figure 2 illustre un type de réalisation du dispositif optique selon l'invention;
— les figures 3 à 10 illustrent des aspects particuliers du dispositif optique selon l'invention;
— la figure 11 illustre un dispositif d'asservissement du dispositif optique selon l'invention.

Le diagramme de rayonnement d'un laser à semi-conducteur n'est pas isotrope. Son ouverture peut être par exemple de l'ordre de 10° dans la direction de la grande dimension de la face d'émission et de l'ordre de 25° dans la direction perpendiculaire, si bien que la projection du faisceau parallèle dans le plan de la pupille d'entrée de l'objectif est elliptique. Il existe deux grands types de lasers semi-conducteurs, les lasers à "guidage par gain"; ce guidage correspond à un guidage des porteurs et les lasers à "guidage d'indice"; ce guidage correspond à un guidage de l'onde lumineuse grâce à des sauts d'indice dans la structure de guidage. Le rapport entre le grand axe et le petit axe dans le cas d'un laser à "guidage par gain" est compris entre 1 et 2 d'où son intérêt par rapport à un laser de type à "guidage par indice" pour lequel ce rapport est de l'ordre de 3, ce qui nécessite alors la présence d'un prisme anamorphoseur pour modifier la forme du faisceau.

Le dispositif de l'invention utilise l'astigmatisme du laser semi-conducteur à "guidage par gain" pour réaliser un asservissement de focalisation nécessaire à la conception d'une tête d'enregistrement lecture sur disque optique. En effet, un caractéristique essentielle du laser semi-conducteur avec un "guidage par gain" est l'astigmatisme (15 µm environ) que présente la surface d'onde à la sortie du laser. On utilise donc cet astigmatisme naturel pour réaliser un asservissement de focalisation de type "astigmatique".

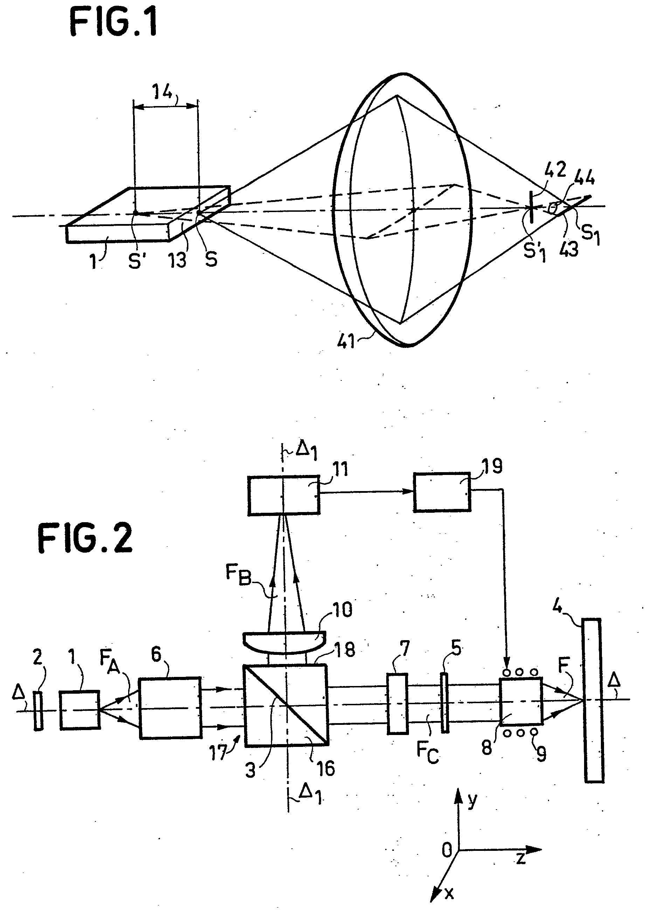

Comme représenté à la figure 1, le rayonnement sortant du laser 1 a deux centres de phase distincts S et S' selon deux plans perpendiculaires, S étant sur la face de sortie 13 du laser 1. La distance SS' 14 est d'environ 15 micromètres.

Si on dispose une lentille convergente 41 dans ce rayonnement, on obtient des figures de focalisation qui varient entre deux figures extrêmes. Au faisceau vertical de centre de phase S correspond une ligne de focalisation 43 horizontale passant par le point $S_1$ image de S. Au faisceau horizontal de centre de phase S' correspond une ligne de focalisation 42 verticale passant par le point $S'_1$ image S'. Entre ces deux extrêmes se situe la figure circulaire 44.

Si on considère la figure 2, le laser semiconducteur 1 à une longueur d'onde d'émission de 8300 Å, par exemple, et est polarisé linéairement suivant le plan de la jonction, ce qui permet d'utiliser un séparateur de faisceau par polarisation 16. Celui-ci peut être, par exemple un cube constitué de deux prismes collés. La surface de séparation 3 constituée par l'hypoténuse des deux cubes est traitée de façon à être séparatrice de polarisation: elle transmet en totalité des rayonnements ayant une polarisation donnée et elle réfléchit en totalité des rayonnements ayant une polarisation à 90° de la précédente. Ainsi sur la figure 2 le rayonnement $F_A$ provenant de la source laser est intégralement transmis vers le disque 4. Un objectif 6 d'axe optique confondu avec l'axe Δ est placé entre le laser 1 et le séparateur de faisceau par polarisation 16. A sa sortie le rayonnement est rendu à peu près parallèle pour atteindre en sa totalité la face 17 du séparateur de faisceau 16. Cet objectif est conçu de façon à ne pas présenter d'aberrations sphériques pour les ouvertures maximales du faisceau $F_A$ formés par le laser 1.

Un asservissement de puissance du laser 1 peut être avantageusement prévu, selon une technique classique qui consiste à utiliser le fait qu'une jonction semi-conductrice émet des rayonnements dans deux sens opposés. En plaçant un photodétecteur 2 sur la face arrière du laser 1 de façon qu'il reçoive le rayonnement émis dans le sens opposé au disque, on a une indication de la puissance émise que l'on peut maintenir constant par une boucle de rétroaction.

Pour compenser l'astigmatisme propre au laser semiconducteur à "guidage par gain", on intoduit une lentille cylindrique 7 de puissance adaptée dans la trajet optique, afin d'avoir au niveau du disque un faisceau de lumière dont la surface d'onde ne présente donc plus d'astigmatisme.

Cett lentille permet d'obtenir un faisceau collimaté $F_C$. Elle présente, donc, deux rayons de courbures différents pour compenser l'astigmatisme du rayonnement incident. Ce rayonnement provient de la source laser 1, et il a traversé successivement l'objectif 6 et le séparateur de faisceau par polarisation 16. Cette lentille peut être torique ou par exemple cylindrique.

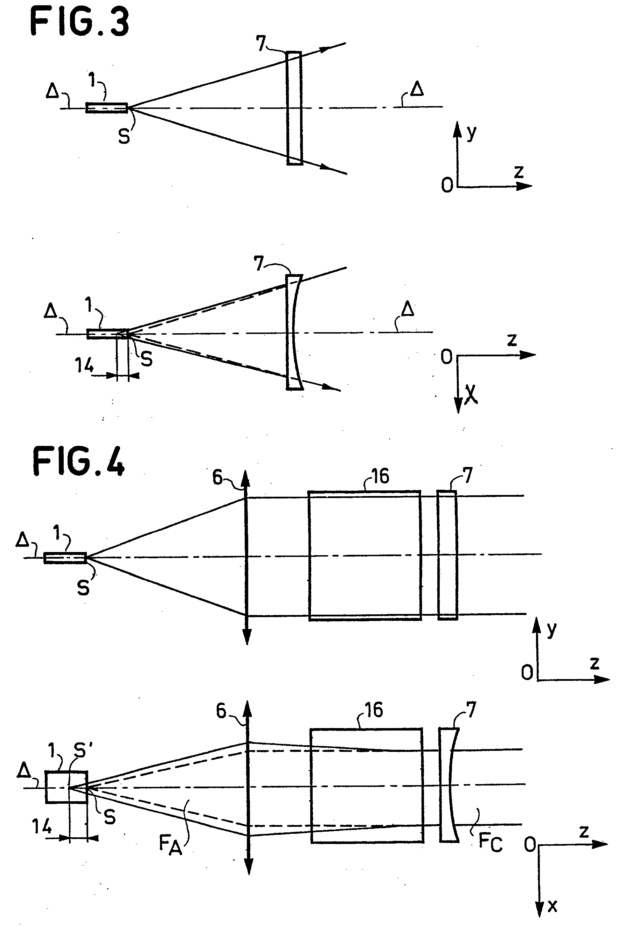

C'est le cas théorique considéré à la figure 3. La lentille 7 est une lentille cylindrique. Elle n'affecte pas la directivité du faisceau dans le plan zoy de la figure 3, et dans le plan xoz le fait diverger afin d'obtenir un faisceau stigmatique c'est à dire ayant un même centre de phase dans toutes les directions.

Sur la figure 4 dans le plan yoz le point S de la face de sortie du laser 1 est considéré au foyer de l'objectif 6 ici schématisé comme une lentille. A la sortie de cet objectif les rayons sont parallèles et la lentille 7 n'apporte aucune modification, par contre dans le plan xoz, du fait de la distance 14 entre le centre des phases S' et le foyer S, le faisceau à la sortie de l'objectif 6 est légèrement convergent, la lentille 7 permet alors d'obtenir un faisceau collimaté.

Mais la lentille 7 peut avoir des rayons de courbures autres. Elles peut notamment être convergente pour l'un de ces rayons. Le faisceau $F_A$ après traversée de l'objectif 6 et de cette lentille 7 devant être un faisceau collimate $F_C$, les rayons de courbure de la lentille 7 sont fonction de l'objectif 6.

Le faisceau $F_C$ transmis par cette lentille 7 atteint ensuite la lame parallèle quart d'onde 5 de la figure 2. Cette lame est orientée à 45° de la polarisation du faisceau incident $F_C$.

Cette lame quart d'onde permet de réaliser un découplage optique. En effet les rayonnements issus de la source (1) et réfléchi par la surface (4) n'auront plus une même polarite et ne pourront donc interférer.

De plus, l'onde incidente polarisée linéairement ressort de cette lame parallèle λ/4 polarisée circulairement et par exemple dans le sens levogyre. Cette onde va être transmise aux éléments de la tête d'enregistrement-lecture et réfléchie par le disque. Elle est retournée ensuite vers la lame λ/4 toujours polarisée circulairement mais dans le sens dex trogyre. Il s'en suit que cette onde test retournée vers le séparateur de faisceau 16, après traversée de la lame λ/4, polarisée linéairement mais à 90° de la polarisation originale. Il s'en suit qu'à la traversée du séparateur de faisceau 16 il y a réflexion sur la face 3.

Ainsi le faisceau réfléchi par la surface du disque de la figure 1 est séparé du faisceau émis par le laser 1 grâce à la lame quart d'onde 5 et à la surface séparatrice 3 d'un cube séparateur par polarisation 16. Lorsque le faisceau F est parfaitement focalisé sur le disque, formant une tâche quasi ponctuelle T, après traversée de la lentille convergente 10 qui peut être par exemple une lentille plan convexe, le faisceau de retour $F_B$ se focalise en un point B en cas de faisceau astigmatique. Lors de la lecture, la puissance du faisceau $F_B$, qui peut être détecté au voisinage de ce point B fictif en cas de faisceau astigmatique par des moyens de détection 11 est fonction de l'état de surface du disque 4 au point T. La présence d'une empreinte gravée en creux implique une absence ou une diminution du pouvoir réfléchissant du disque. Au contraire, dans les zones non gravées le faisceau est totalement réfléchi. Ainsi, la puissance du faisceau $F_B$ est modulée au fur et à mesure de la rotation du disque et de l'avance radiale de la tête, au rythme de la modulation de relief préalablement inscrite sur le disque. Par ailleurs, tant au cours de l'enregistrement que de la lecture, il est souhaitable que les moyens de détection 11 puissent détecter les erreurs de focalisation (le point T n'est pas exactement dans le plan du disque) exprimées sous la forme d'un décalage en z. Les signaux de détection de ces erreurs sont alors utilisés par l'intermédiaire du circuit 19 pour asservir la position de l'objectif 8. Ces moyens de détection peuvent également permettre de détecter les erreurs de suivi radial (le point T n'est pas situé sur la piste gravée, dans le case de la lecture, ou sur la piste que l'on souhaite tracer généralement matérialisée sous la forme d'une piste pré-gravée dans le cas de l'enregistrement), exprimées sous la forme d'un d'écalage sur l'axe radial du disque 4.

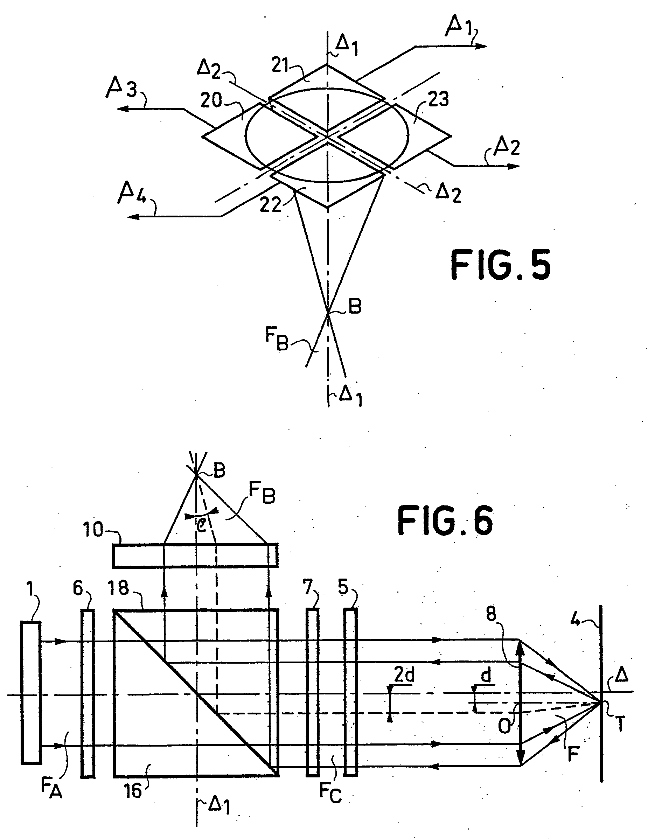

Un mode de réalisation des moyens de détection est représenté sur la figure 5. Il permet d'obtenir un signal d'erreur de suivi radial, un signal d'erreur de focalisation, et éventuellement un signal de lecture. Les moyens de détection comprennent 4 photodétecteurs 20, 21, 22, 23 disposées dans un plan xoz parallèle à la face 18 du séparateur de faisceaux 16.

Les quatre photodétecteurs sont disposés en carré autour de l'axe $\Delta_1$, le plus proche possible les uns des autres, et de façon qu'en l'absence de toute erreur de focalisation, la puissance du faisceau $F_B$ se répartisse de façon égale dans les quatre photodétecteurs. La position de ces photodétecteurs est choisie de façon que, avec ou sans erreurs, la tache formée dans le plan des photodétecteurs par le faisceau $F_B$ soit entièrement couverte par ceux-ci, afin qu'ils détectent la quasi-totalité de la puissance du faisceau $F_B$. Ainsi la somme des signaux de sortie respectifs de ces quatre photodétecteurs $s_1$, $s_2$, $s_3$, $s_4$ indique la présence ou non d'une empreinte sur le disque à l'emplacement de la tache et constitue donc un signal de lecture.

Le cas considéré à la figure 5 est celui de l'art connu. Le faisceau $F_B$ est un faisceau stigmatique qui converge doncen un point B. La tache obtenue dans le plan des photodétecteurs est circulaire et centrée sur l'axe $\Delta_1$.

Dans ce cas, la méthode de détection de l'erreur de focalisation de l'art connu, dite méthode asymétrique, illustrée à la figure 6, on créé un décalage d entre les axes du dispositif optique 1, 6, 16, 7, 5 et l'axe de l'objectif 8, mais dans ce cas on considère un faisceau $F_A$ stigmatique. Un tel décalage peut résulter simplement d'un mauvais réglage de l'alignement. L'axe $\Delta$ ne passant pas par le centre optique O de l'objectif 8, le faisceau réfléchi par le disque 4 ne coïncide plus avec le faisceau incident; même en l'absence d'erreur de focalisation les deux faisceaux sont décalés de 2d.

Il en résulte après traversée de la lentille 10 un décalage angulaire $\beta$. Le faisceau $F_B$ converge au point B mais son axe forme un angle $\beta$ avec l'axe $\Delta_1$. Une défocalisation provoque alors dans un plan de détection parallèle à la face 18 du cube 16 un déplacement de la tache lumineuse qui peut être détecté au moyen de deux photodétecteurs, disposés de façon à recevoir la même fraction d'énergie lumineuse lorsque l'erreur de focalisation est nulle.

En cas d'erreur de suivi radial lorsque le point de focalisation T est décalé par rapport à la piste prégravée ou à la piste porteuse d'information, seule une partie du faisceau F se trouve réfléchie et l'intensité n'est plus également répartie entre deux photodétecteurs placées symétriquement par rapport à l'axe $\Delta_1$. Si l'on fait en sorte que le décalage d créé entre l'axe optique et l'axe $\Delta$ corresponde à un décalage sur le disque dans une direction tangentielle aux sillons enregistrés, il est alors nécessaire de disposer quatre photodétecteurs disposés en carré autour de l'axe $\Delta_1$.

L'inconvénient de ce type d'asservissement est dû au fait d'éclairer asymétriquement la pupille d'entrée de l'objectif de gravure 8. En effet cela fait perdre en qualité diamètre de tache, d'où une fréquence de coupure du système abaissée.

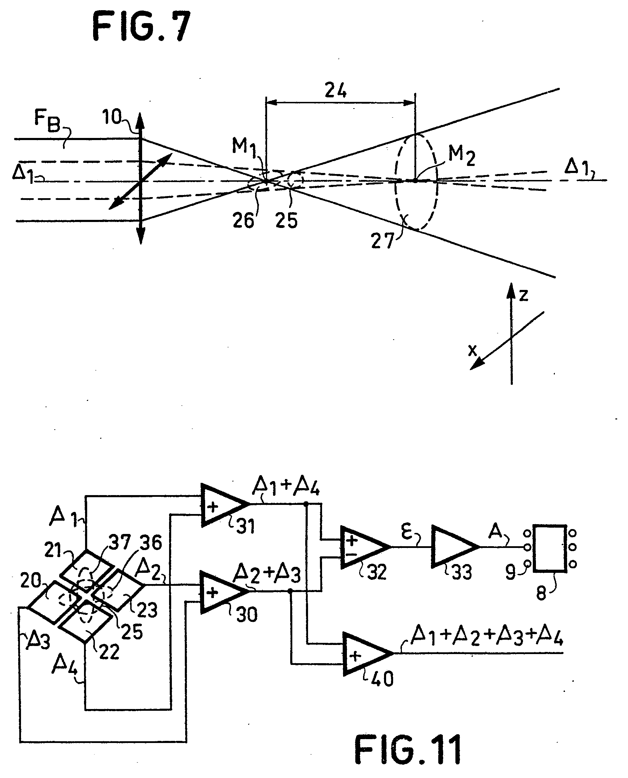

Par contre, dans le dispositif selon l'invention le faisceau $F_B$ est astigmatique. En effet, l'asservissement de focalisation du faisceau lumineux F sur le disque 4 selon l'invention fonctionne de la façon suivante: le faisceau incident F sur le disque 4 a été corrigé par la lentille cylindrique 7, il est donc dépourvu d'astigmatisme. Mais après réflexion sur le disque 4 il retraverse la lame quart d'onde 5 puis la lentille cylindrique 7; il se trouve donc réfléchi par le cube séparateur 16 vers les quatre photodétecteurs en présentant à nouveau de l'astigmatisme du fait du passage dans la lentille 7 à deux rayons de courbures différents. Ainsi après passage dans la lentille 10, il y a un astigmatisme radial représenté à la figure 7. Il n'y a plus focalisation en un point B. On a dessiné le rayonnement $F_B$ dans deux plans perpendiculaires, on obtient du fait de l'astigmatisme axial deux points de convergences différents $M_1$ et $M_2$ dans ces deux plans perpendiculaires. On obtient une tache lumineuse minimum en 25, située entre ces deux points $M_1$ et $M_2$. On positionne les photodétecteurs dans le plan de cette tache, perpendiculairement à l'axe $\Delta_1$.

Si par exemple les objectifs 6 et 8 ont une distance focale de 5 millimètres, et la lentille 10 une distance focale de 30 millimètres, le grandissement axial au niveau du foyer de la lentille 10 où se trouve les photodétecteurs sera de

$$\left(\frac{30}{5}\right)^2 = 36$$

L'astigmatisme qui est de 15 micromètres (longueur SS' 14) au niveau du laser 1 devient donc 540 micromètres au niveau des photodétecteurs (longueur 24).

Lorsqu'après réglage de la position des photodétecteurs, il y a mauvaise focalisation du faisceau F sur le disque 4, ley photodétecteurs ne détectent plus une tache lumineuse de forme 25 mais de forme 26 ou de forme 27; ce qui permet d'extraire un signal d'erreur.

Les quatre photodétecteurs sont orientés de telle façon que leurs diagonales se superposent avec les deux axes de la figure 7, Ox et Oz. Ce qui revient à incliner à 45° les axes limitant les quatre quadrants de ces photodétecteurs par rapport aux lignes de focalisation qui sont parallèles aux côtés de la fenêtre émissive de la source laser. Ces lignes de focalisation sont donc les bissectrices des angles formés par ces axes.

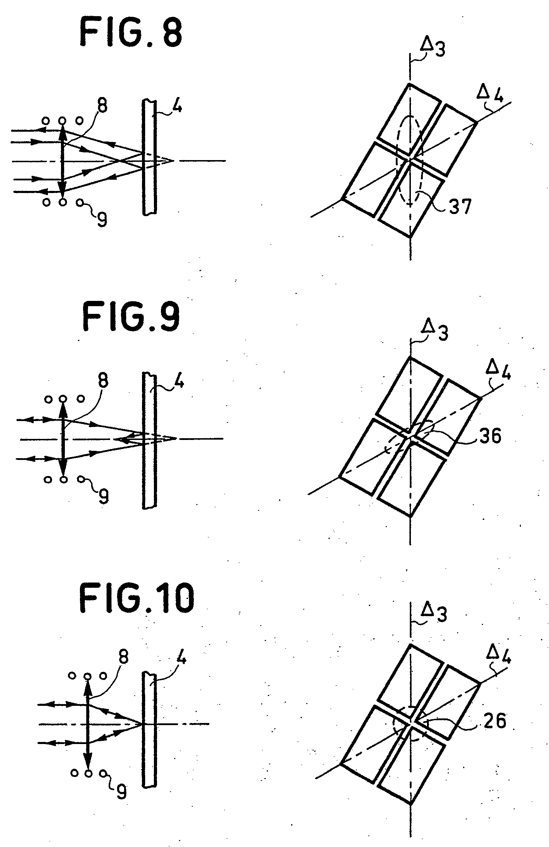

Trois cas d'éclairages de ces photodétecteurs se présentent: focalisation avant le disque comme représenté à la figure 8; focalisation après le disque comme représenté à la figure 9 et enfin focalisation sur le plan portant l'information comme sur la figure 10. On retrouve des taches lumineuses 36 et 37 de même forme que les taches 26 et 27.

Sur la figure 11 on représente schématiquement un type réalisation d'assvervissement selon l'invention. Les photodétecteurs appartenant à une même diagonale sont reliés à un additionneur; les photodétecteurs 20 et 23 à l'additionneur 30 et les photodétecteurs 21 et 22 à l'additionneur 31. On obtient donc deux signaux: $S_1+S_4$ et $S_2+S_3$. Ces signaux entrent alors dans un amplificateur différentiel 32. Le signal qui sort de cet amplificateur différentiel 32 constitue ainsi le signal de contrôle de focalisation, du fait de la forme des taches lumineuses détectées 25, 36 et 37. Pour une bonne focalisation (tache 25), le signal ε est donc nul car les quatres cellules sont éclairées uniformément. Ce signal ε une fois amplifié par un amplfcateur 33 commande un moteur 9 qui permet de déplacer l'objectif 8 jusqu'à ce que ε soit nul.

En effet cet objectif 8 peut être rendu solidaire d'une bobine 9 placée dans l'entrefer d'un aimant permanent tel que, lorsque cette bobine 9 est parcourue par un courant fonction du signal A, une force entrainant un déplacement vertical de l'ensemble bobine-objectif est créée. Les autres éléments de la tête optique: laser 1, objectif 6, cube séparateur 16, lentilles 10 et 7, détecteurs 11, lame 5 peuvent être considérés solidaires entre eux, suivant l'axe Δ de la tête, le seul élément mobile suivant Δ étant alors cet ensemble bobine 9-objectif 8.

Ainsi avec un tel asservissement de focalisation qui est très bien adapté à un laser à "guidage par gain", l'éclairage de la pupille d'entrée de l'objectif de gravure est uniforme et en pleine ouverture. La tache focalisée sur le disque est par conséquent de meilleure qualité.

Le signal $S_1+S_2+S_3+S_4$ obtenu à la sortie de l'additionneur 40 est le signal de lecture.

**Revendications**

1. Dispositif optique détecteur d'écart de focalisation entre le point de convergence d'un rayonnement lumineux et une surface réfléchissante comportant une source laser (1) à semiconducteur émettant ce rayonnnement lumineux et éclairant cette surface (4) via un objectif (8); cet objectif (8) assurant la focalisation du rayonnement reçu de cette source (1); des moyens optique séparateurs étant positionnés entre cette source (1) et cet objectif (8) pour renvoyer vers des moyens photodétecteurs (11) le rayonnement recueilli par cet objectif (8) en provenance de cette surface réfléchissante (4), ces moyens photodétecteurs comportant quatre éléments dont les faces sensibles occupent quatre quadrants, caractérisé en ce que cette source (1) présente un astigmatisme longitudinal, une lentille (7) astigmatique étant placée entre lesdits moyens optiques séparateurs (16) et ledit objectif (8) afin de compenser cet astigmatisme longitudinal et d'introduire un astigmatisme du rayonnement recueilli par cet objectif (8) en provenance de cette surface réfléchissante (4).

2. Dispositif optique suivant la revendication 1, caractérisé en ce que ces moyens séparateurs (16) comportent deux prismes réfringents accolés par leurs hypoténuses de façon à former une surface séparatrice (3) semi-réfléchissante.

3. Dispositif optique suivant la revendication 2 caractérisé en ce que cette surface séparatrice (3) réfléchit le rayonnement provenant de cette surface réfléchissante (4).

4. Dispositif optique suivant l'une quelconque des revendications 1 à 3, caractérisé en ce qu'une lame quart d'onde (5) est placée entre la source (1) et l'objectif (8) afin de réaliser un découplage optique.

5. Dispositif optique suivant la revendication 4, caractérisé en ce que les moyens optiques séparateurs (16) comportent un cube séparateur à polarisation transmettant le rayonnement polarisé issu de cette source (1); cette lame quart d'onde (5) étant située entre ce cube séparateur (16) et cet objectif (8).

6. Dispositif optique suivant l'une quelconque des revendications 1 à 5, caractérisé en ce qu'il comprend entre la source (1) et l'objectif (8) une lentille collimatrice (6).

7. Dispositif optique suivant l'une quelconque des revendications 1 à 6, caractérisé en ce qu'il comprend une lentille convergente (10) située entre le cube séparateur (16) et les moyens photodétecteurs (11).

8. Dispositif optique suivant l'une quelconque des revendications précédentes, caractérisé en ce que les lignes focales du rayonnement issu de la source (1) forment les bissectrices des axes délimitant les moyens photodétecteurs suivant quatre quadrants.

9. Einregistreur-lecteur optique d'un support d'information comportant une surface réfléchissante (4), caractérisé en ce qu'il comprend un dispositif optique détecteur d'écart de focalisation selon l'une quelconque des revendications 1 à 8.

10. Enregistreur-lecteur optique suivant la revendication 9, caractérisé en ce que le signal d'écart de focalisation délivré par ces moyens photodétecteurs (11) agit sur un moteur (9) déplaçant cet objectif (8) selon son axe optique (Δ).

11. Enregistreur-lecteur optique suivant l'une quelconque des revendications 9 et 10, caractérisé en ce que des moyens additionneurs reliés à ces éléments photodétecteurs (11) délivrent un signal électrique caractéristique de l'information inscrite dans cette surface réfléchissante.

## Patentansprüche

1. Optische Detektorvorrichtung zur Feststellung eines Fokussierfehlers zwischen dem Konvergenzpunkt einer Lichtstrahlung und einer reflektierenden Oberfläche, mit einer Halbleiter-Laserquelle (1), welche diese Lichtstrahlung aussendet und diese Oberfläche (4) über ein Objektiv (8) beleuchtet; wobei dieses Objektiv (8) die Fokussierung der von dieser Quelle (1) empfangenen Strahlung gewährleistet; wobei optische Trennmittel zwischen dieser Quelle (1) und diesem Objektiv (8) angeordnet sind, um die durch dieses Objektiv (8) von dieser reflektierenden Oberfläche (4) empfangene Strahlung zu Fotodetektormitteln (11) zurückzuwerfen, wobei diese Fotodetektormittel vier Elemente enthalten, deren empfindliche Fläche vier Quadranten einnehmen, dadurch gekennzeichnet, daß diese Quelle (1) einen longitudinalen Astigmatismus Aufweist, wobei eine astigmatische Linse (7) zwischen den genannten optischen Trennmitteln (16) und dem genannten Objektiv (8) angeordnet ist, um diesen longitudinalen Astigmatismus zu kompensieren und einen Astigmatismus der Strahlung einzuführen, die durch dieses Objektiv (8) von dieser reflektierenden Oberfläche (4) aufgenommen wird.

2. Optisch Vorrichtung nach Anspruch 1, dadurch gekennzeichnet, daß diese Trennmittel (16) zwei lichtbrechende Prismen enthalten, die an ihren Hypotenusen aneinandergefügt sind, so daß sie eine halbreflektierende Trenn-oberfläche (3) bilden.

3. Optische Vorrichtung nach Anspruch 2, dadurch gekennzeichnet, daß diese Trennoberfläche (3) die von dieser geflektierenden Oberfläche (4) ausgehende Strahlung reflektiert.

4. Optische Vorrichtung nach einem der Ansprüche 1 bis 3, dadurch gekennzeichnet, daß ein Viertelwellenlängenplättchen (5) zwischen der Quelle (1) und dem Objektiv (8) angeordnet ist, um eine optische Entkopplung zu verwirklichen.

5. Optische Vorrichtung nach Anspruch 4, dadurch gekennzeichnet, daß die optischen Trennmittel (16) einen mit Polarisation arbeitenden Trennwürfel umfassen, der die von dieser Quelle (1) ausgehende polarisierte Strahlung durchläßt; wobei dieses Viertelwellenlängenplättchen (5) zwischen diesem Trennwürfel (16) und diesem Objektiv (8) angeordnet ist.

6. Optische Vorrichtung nach einem der Ansprüche 1 bis 5, dadurch gekennzeichnet, daß sie zwischen der Quelle (1) und dem Objektiv (8) eine Kollimatorlinse (6) enthält.

7. Optische Vorrichtung nach einem der Ansprüche 1 bis 6, dadurch gekennzeichnet, daß sie eine Konvergenzlinse (10) umfaßt, die zwischen dem Trennwürfel (16) und den Fotodetektormitteln (11) angeordnet ist.

8. Optische Vorrichtung nach einem der vorstehenden Ansprüche, dadurch gekennzeichnet, daß die Fokuslinien der von der Quelle (1) ausgehenden Strahlung die Winkelhalbierenden der Achsen bilden, welche die Fotodetektormittel in vier Quadranten unterteilen.

9. Optisches Aufzeichnungs- und Lesegerät für einen Informationsträger, der eine reflektierende Oberfläche (4) aufweist, dadurch gekennzeichnet, daß es eine optische Detektorvorrichtung zur Feststellung eines Fokussierfehlers nach einem der Ansprüche 1 bis 8 enthält.

10. Optisches Aufzeichnungs- und Lesergerät nach Anspruch 9, dadurch gekennzeichnet, daß das Fokussier-Fehlersignal, welches von diesen Fotodetektormitteln (11) abgegeben wird, auf einen Motor (9) einwirkt, welcher dieses Objektiv (8) längs seiner optischen Achse (Δ) bewegt.

11. Optisches Aufzeichnungs- und Lesegerät nach einem der Ansprüche 9 und 10, dadurch gekennzeichnet, daß Addiermittel, welche mit diesen Fotodetektormitteln (11) verbunden sind, ein elektrisches Signal abgeben, welches charackteristisch für die auf dieser reflektierenden Oberfläche aufgezeichnete Information ist.

## Claims

1. Optical detector of the focusing error between the convergence point of a light radiation and a reflecting surface, comprising a semiconductor laser source (1) transmitting this light radiation and illuminating this surface (4) through an objective (8); this objective (8) ensuring the focusing of the radiation received from this source (1); optical separator means being positioned between this source (1) and this objective (8) for reflecting towards photodetector means (11) the radiation received through this objective (8) from this reflecting surface (4), these photodetector means comprising four elements the sensitive surfaces of which occupy four quadrants, characterized in that this source (1) has a longitudinal astigmatism, an astigmatic lens (7) being placed between these optical separator means (16) and said objective (8) in order to compensate for this longitudinal astigmatism and for introducing an astigmatism of the radiation received through this objective (8) from this reflecting surface (4).

2. Optical device according to claim 1, characterized in that these separator means (16) comprise two refringent prisms joined along their hypotenuses in a manner to form a semi-reflecting splitter surface (3).

3. Optical device according to claim 2 characterized in that this splitter surface (3) reflects the radiation received from this reflecting surface (4).

4. Optical device according to any of claims 1 to 3, characterized in that a quarter wavelength sheet (5) is placed between the source (1) and the objective (8) in order to provide an optical decoupling.

5. Optical device according to claim 4, characterized in that the optical separator means (16) comprise a polarization type splitter cube transmitting the polarized radiation originating from this source (1); this quarter wavelength sheet (5) being situated between this separator cube (16) and this objective (8).

6. Optical device according to any of claims 1 to 5, characterized in that it comprises a collimating lens (6) between the source (1) and the objective (8).

7. Optical device according to any of claims 1 to 6, characterized in that it comprises a convergent lens (10) placed between the separator cube (16) and the photodetector means (11).

8. Optical device according to any of the preceding claims, characterized in that the focal lines of the radiation originating from the source (1) form the bisectors of the axes defining the photodetector means according to four quadrants.

9. Optical recorder/reader of an information carrier comprising a reflecting surface (4), characterized in that it comprises an optical focusing error detector device according to any of claims 1 to 8.

10. Optical recorder/reader according to claim 9, characterized in that the focusing error signal provided by these photodetector means (11) acts upon a motor (9) displacing this objective (8) along its optical axis (Δ).

11. Optical recorder/reader according to any of claims 9 and 10, characterized in that adder means connected to these photodetector elements (11) supply an electric signal which is characteristic of the information recorded on this reflecting surface.

# FIG.1

# FIG.2

# FIG.3

# FIG.4

# FIG.5

# FIG.6

# FIG.7

# FIG.11

# FIG. 8

# FIG.9

# FIG.10